# EUROPÄISCHE PATENTSCHRIFT

(11) **EP 3 230 115 B1**
(45) Veröffentlichungstag und Bekanntmachung des Hinweises auf die Patenterteilung: **04.08.2021**
(21) Anmeldenummer: 15775725.3
(22) Anmeldetag: 09.10.2015
(51) Int. Cl.: B60L 50/60, B60L 53/14, B60L 53/24

(54) **VORRICHTUNG ZUM LADEN EINER BATTERIEEINHEIT UND BETREIBEN EINER LASTEINHEIT ÜBER EINEN WECHSELRICHTER**
DEVICE FOR CHARGING A BATTERY UNIT AND OPERATING A LOAD UNIT VIA AN INVERTER
DISPOSITIF PERMETTANT DE CHARGER UNE UNITÉ BATTERIE ET DE FAIRE FONCTIONNER UNE UNITÉ DE CHARGE PAR L'INTERMÉDIAIRE D'UN ONDULEUR

(30) Priorität: 11.12.2014 DE 102014225506
(43) Veröffentlichungstag der Anmeldung: 18.10.2017
(73) Patentinhaber: Robert Bosch GmbH, 70442 Stuttgart (DE)
(72) Erfinder: KOHLRAUSCH, Philipp, 70180 Stuttgart (DE)
(86) Internationale Anmeldenummer: PCT/EP2015/073340
(87) Internationale Veröffentlichungsnummer: WO 2016/091426

(56) Entgegenhaltungen:
- EP-A1- 2 711 234
- WO-A1-2011/063006
- FR-A1- 2 939 244
- FR-A1- 2 946 473
- US-A1- 2012 181 975

## Beschreibung

### Stand der Technik

Die vorliegende Erfindung betrifft eine Vorrichtung zum Laden einer Batterieeinheit und Betreiben einer Lasteinheit über einen Wechselrichter.

Aktuell nutzen elektrisch unterstützte Fahrräder typischerweise eine Sekundärbatterie als Energiespeicher. Zum Laden einer solchen Batterie werden Ladegeräte verwendet. Diese Ladegeräte bestehen aus einem Wechselstrom-Gleichstrom-Wandler (AC/DC) und einem Gleichstrom-Gleichstrom-Wandler (DC/DC). Die Batterie wird entweder nach Entnahme aus dem Fahrrad direkt mit dem Ladegerät verbunden oder, bei einem Laden am Fahrrad, innerhalb der Batteriehalterung über eine weitere Schnittstelle geladen.

Bei einem Aufladen der Batterie des Fahrrads in einem öffentlichen Raum stellt sich das Problem, dass hohe Wechselspannungen mit Steckverbindungen beherrscht werden müssen. Es ist somit erstrebenswert eine Vorrichtung zu schaffen, die ein direktes Laden der Batterie des Fahrrades von einer Gleichstromquelle ermöglicht. Dabei soll sowohl aus Kosten- als auch aus Gewichtsgründen auf zusätzliche Wandler verzichtet werden.

Die FR 2 946 473 A1 offenbart eine Baugruppe, welche einen Elektromotor, eine Batterie und einen Wechselrichter umfasst, wobei die Baugruppe Schalter umfasst, die entweder ein Versorgen des Elektromotors durch die Batterie, ein Aufladen der Batterie durch eine einphasige Spannungsversorgung oder ein Aufladen der Batterie durch eine mehrphasige Spannungsversorgung ermöglichen.

Die WO 2011/063006 A1 und die FR 2 939 244 A1 offenbaren Ladesysteme, in denen eine externe Spannungsversorgung mit einem Ausgang eines Wechselrichters gekoppelt ist.

### Offenbarung der Erfindung

Die erfindungsgemäße Vorrichtung zum Laden einer Batterieeinheit und Betreiben einer Lasteinheit über einen Wechselrichter umfasst eine Lasteinheit mit mehreren Anschlüssen, wobei die Lasteinheit zwischen zumindest zweien der Anschlüsse zumindest ein induktives Element aufweist, einen Wechselrichter, der mehrere Schaltelemente umfasst und dessen Ausgang mit den Anschlüssen der Lasteinheit gekoppelt ist, eine Auswahleinheit und eine Steuereinheit. Die Steuereinheit ist dazu eingerichtet, die Auswahleinheit in einer Betriebsphase derart anzusteuern, dass ein erster Pol einer Batterieeinheit mit einem ersten Eingang des Wechselrichters gekoppelt ist, um diesen mit einer Batteriespannung zu versorgen, und die Schaltelemente des Wechselrichters in der Betriebsphase derart zu schalten, dass die Lasteinheit mit einer benötigten Wechselspannung versorgt wird. Die Steuereinheit ist ferner dazu eingerichtet, die Auswahleinheit in einer Ladephase, in welcher ein Spannungsabgriff einer externen Versorgungseinheit mit dem ersten Eingang des Wechselrichters koppelt ist, um diesen mit einer externen Gleichspannung oder einem externen Gleichstrom zu versorgen, derart anzusteuern, das der erste Pol der Batterieeinheit mit einem der induktiven Elemente der Lasteinheit gekoppelt ist, und die Schaltelemente des Wechselrichters derart zu schalten, dass die Batterieeinheit von der externen Versorgungseinheit über das an die Batterieeinheit gekoppelte induktive Element mit einem benötigten Ladestrom oder einer benötigten Ladespannung versorgt wird. Weitere Merkmale der Erfindung sind in den unabhängigen Ansprüche 1 und 10 definiert.

Das erfindungsgemäße Verfahren zum Laden einer Batterieeinheit und Betreiben einer Lasteinheit über einen Wechselrichter umfasst ein Feststellen, ob eine Betriebsphase oder eine Ladephase vorliegt. Im Falle einer vorliegenden Betriebsphase erfolgt ein Koppeln eines ersten Pols einer Batterieeinheit mit einem ersten Eingang eines Wechselrichters, um diesen mit einer Batteriespannung zu versorgen. Ferner erfolgt im Falle einer vorliegenden Betriebsphase ein Schalten von Schaltelementen des Wechselrichters in einer Weise, dass die Lasteinheit mit einer benötigten Wechselspannung versorgt wird. Im Falle einer vorliegenden Ladephase erfolgt ein Koppeln des ersten Pols der Batterieeinheit mit einem induktiven Element der Lasteinheit und ein Koppeln eines Spannungsabgriffs einer externen Versorgungseinheit mit dem ersten Eingang des Wechselrichters, um diesen mit einer externen Gleichspannung oder einem externen Gleichstrom zu versorgen. Ferner erfolgt im Falle einer vorliegenden Ladephase ein Schalten der Schaltelemente des Wechselrichters in einer Weise, dass die Batterieeinheit von der externen Versorgungseinheit über eines der induktiven Elemente mit einem benötigten Ladestrom oder einer benötigten Ladespannung versorgt wird. Weitere Merkmale der Erfindung sind in den unabhängigen Ansprüche 1 und 10 definiert.

Die erfindungsgemäße Vorrichtung und das erfindungsgemäße Verfahren erweisen sich als vorteilhaft, da durch diese ein Laden einer Batterie der Batterieeinheit mittels einer bereitgestellten Gleichspannung oder eines bereitgestellten Gleichstroms ermöglicht wird. Dabei werden die Komponenten der Vorrichtung, die zum Betreiben der Lasteinheit notwendig sind, ebenfalls dazu genutzt, um den benötigten Ladestrom oder die benötigte Ladespannung für die Batterie der Batterieeinheit bereitzustellen. Lediglich eine minimale Anzahl zusätzlicher Komponenten wird somit benötigt, wodurch sowohl ein Kostenvorteil als auch ein Gewichtsvorteil erzielt werden kann.

Insbesondere wird die erfindungsgemäße Vorrichtung oder das erfindungsgemäße Verfahren in einem elektrischen Fahrrad genutzt. Dadurch wird ein Aufladen der Batterie des Fahrrades durch eine Gleichstromquelle ermöglicht. Dies hat vor allem im öffentlichen Raum den Vorteil, dass keine hohen Wechselspannungen mit Steckverbindungen beherrscht werden müssen.

Die Unteransprüche zeigen bevorzugte Weiterbildungen der Erfindung.

Es ist vorteilhaft, wenn die Lasteinheit einen Motor umfasst, wobei das induktive Element insbesondere eine Spule des Motors ist. Durch eine solche Spule eines Motors ist eine ausreichend hohe Induktivität gegeben, die ein sauberes Regeln des benötigten Ladestroms oder der benötigten Ladespannung ermöglicht.

Ferner ist es vorteilhaft, wenn die Vorrichtung einen Sensor zum Messen der Spannung und/oder des Stroms umfasst, mit welchem die Batterie geladen wird, und die Schaltelemente in der Ladephase derart geschalten werden, dass eine Regelung der Spannung und/oder des Stroms auf Basis der durch den Sensor gemessenen Werte erfolgt. Somit wird ein präzises Erfassen einer aktuellen Ladespannung oder eines aktuellen Ladestroms ermöglicht, wodurch wiederum ein exaktes Einstellen der benötigten Ladespannung oder des benötigten Ladestroms ermöglicht wird.

Ebenso vorteilhaft ist es, wenn die Batterieeinheit in der Ladephase mit mehreren der induktiven Elemente gekoppelt wird und von der externen Versorgungseinheit über die mehreren an die Batterieeinheit gekoppelten induktiven Elemente mit dem benötigten Ladestrom versorgt wird. Insbesondere sind die induktiven Elemente dabei derart gewählt und verschaltet, dass ein Stromfluss durch diese induktiven Elemente in der Ladephase gegenläufige Aktionen der Lasteinheit bewirkt. Auf diese Weise kann beispielsweise ein ungewolltes Drehen eines Motors während der Ladephase vermieden werden.

Insbesondere umfasst der Wechselrichter zumindest ein kapazitives Element, welches einen eingangsseitigen Puffer bildet. Durch ein solches werden Spannungsspitzen in der Betriebsphase unterbunden und eine saubere Spannungsregelung in der Ladephase, insbesondere durch eine Pulsweitenmodulation, ermöglicht.

Bevorzugt umfasst die Vorrichtung eine Batterieeinheit, wobei die Batterieeinheit eine Schutzschaltung gegen Überladung einer Batterie umfasst. Somit wird eine Beschädigung der Batterieeinheit insbesondere in der Ladephase verhindert.

Insbesondere koppelt der Wechselrichter in einem ersten Zeitintervall der Ladephase die externe Versorgungseinheit über ein erstes Schaltelement der Schaltelemente und über ein induktives Element mit einem ersten Pol der Batterieeinheit und koppelt in einem zweiten Zeitintervall der Ladephase einen zweiten Pol der Batterieeinheit über ein zweites Schaltelemente der Schaltelemente und über ein induktives Element der Lasteinheit mit dem ersten Pol der Batterieeinheit. Es wird somit eine Leerlaufphase geschaffen, in der eine Entladung des induktiven Elementes erfolgen kann.

Weiter bevorzugt umfasst das zweite Schaltelement eine Diode, insbesondere eine Inversdiode oder auch parasitäre Diode, wobei das Koppeln des zweiten Pols der Batterieeinheit mit dem ersten Pol der Batterieeinheit über ein induktives Element der Lasteinheit in dem zweiten Zeitintervall über die Diode erfolgt. Es wird somit ein Schalten des zweiten Schaltelementes in dem zweiten Zeitintervall nicht benötigt. Dies vereinfacht die Steuerung der Schaltelemente.

Es ist vorteilhaft, wenn dem induktiven Element ein Widerstand vorgeschaltet ist. Somit können hohe Ströme oder Spannungen an den Schaltelementen verhindert werden. Es ist des Weiteren vorteilhaft, wenn die Schaltelemente Leistungstransistoren, insbesondere IGBTs (Bipolartransistor mit isolierter Gate-Elektrode), oder MOSFETs (Metall-Oxid-Halbleiter-Feldeffekttransistor) sind. Diese ermöglichen ein schnelles Schalten von hohen Strömen und ermöglichen somit eine präzise Steuerung des Ladestroms oder der Ladespannung.

Gemäß der Erfindung ist die Lasteinheit eine Dreiecksschaltung oder eine Sternschaltung. Eine Sternschaltung ermöglicht dabei ein Regeln des Ladestroms oder der Ladespannung über alle der Schaltelemente, die mit dem ersten Eingang des Wechselrichters gekoppelt sind. Durch eine Dreiecksschaltung wird eine möglichst einfache Beschaltung in der Lasteinheit gewährleistet.

### Kurze Beschreibung der Zeichnungen

Nachfolgend werden Ausführungsbeispiele der Erfindung unter Bezugnahme auf die begleitende Zeichnung im Detail beschrieben. Für gleiche Komponenten und Parameter werden jeweils gleiche Bezugszeichen verwendet. In der Zeichnung ist:
- Figur 1: ein Schaltbild einer beispielhaften erfindungsgemäßen Vorrichtung zum Laden einer Batterieeinheit und Betreiben einer Lasteinheit über einen Wechselrichter,
- Figur 2: das Schaltbild der beispielhaften erfindungsgemäßen Vorrichtung, wobei ein Stromfluss über den Wechselrichter und die Lasteinheit in einer Betriebsphase gezeigt ist,
- Figur 3: das Schaltbild der beispielhaften erfindungsgemäßen Vorrichtung, wobei ein Stromfluss über den Wechselrichter und die Lasteinheit in einem ersten Zeitintervall einer Ladephase gezeigt ist, und
- Figur 4: das Schaltbild der beispielhaften erfindungsgemäßen Vorrichtung, wobei ein Stromfluss über den Wechselrichter und die Lasteinheit in einem zweiten Zeitintervall der Ladephase gezeigt ist.

### Ausführungsformen der Erfindung

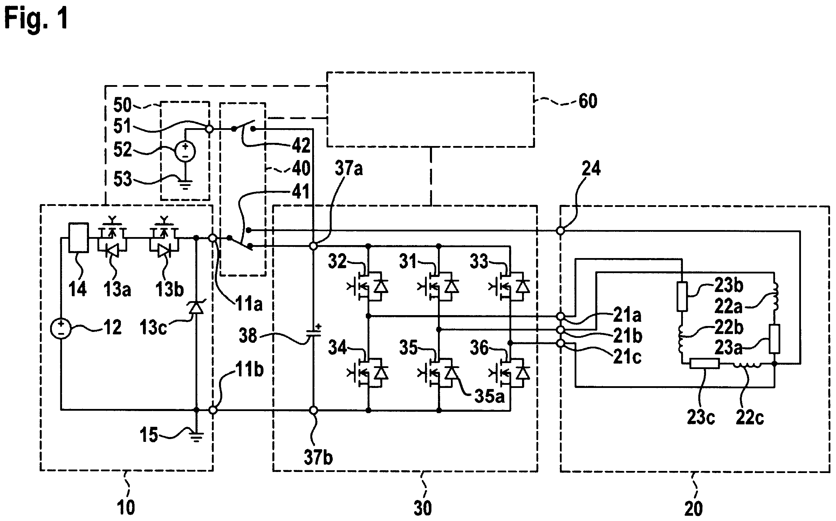

Figur 1 zeigt eine beispielhafte erfindungsgemäße Vorrichtung zum Laden einer Batterieeinheit 10 und Betreiben einer Lasteinheit 20 über einen Wechselrichter 30. Dabei wird eine Ansteuerelektronik eines elektrischen Antriebs, insbesondere eine B6-Brücke des Wechselrichters 30, genutzt, um aus einer konstanten Gleichspannung ein wahlweise Strom oder spannungsgesteuertes Ladeverfahren für eine Batterie 12 der Batterieeinheit 10 zur Verfügung zu stellen. Dabei wird eine bestehende Antriebselektronik lediglich um zwei Schalter erweitert, um die Ladefunktion zu realisieren.

Die Vorrichtung ist in dieser ersten Ausführungsform in einem elektrisch unterstützten Fahrrad angeordnet. Dabei umfasst die Lasteinheit 20 einen Motor, der für einen Vortrieb des Fahrrades angeordnet ist. Die Batterieeinheit 10 umfasst die Batterie 12, die in dieser ersten Ausführungsform eine Lithium-Ionen-Batterie ist und ein Energiespeicher des elektrisch unterstützten Fahrrades ist. Das Fahrrad umfasst ferner eine Auswahleinheit 40 und eine Steuereinheit 60. Zudem zeigt Figur 1 eine externe Versorgungseinheit 50, die nicht Teil des Fahrrades ist.

Die Lasteinheit 20 umfasst ein erstes induktives Element 22a, ein zweites induktives Element 22b und ein drittes induktives Element 22c. Jedes des ersten bis dritten induktiven Elementes 22a bis 22c bildet dabei jeweils eine Spule eines Elektromotors. Die Lasteinheit weist ferner einen ersten Widerstand 23a, einen zweiten Widerstand 23b und einen dritten Widerstand 23c auf. Obwohl als solche in dem Schaltbild der ersten Figur gezeigt, sind der erste bis dritte Widerstand 23a bis 23c der in Figur 1 gezeigten Schaltung in dieser ersten Ausführungsform der Erfindung keine eigenständigen Bauteile, sondern stellen lediglich einen Widerstand der Spulen des Motors dar. In weiteren Ausführungsformen ist der erste bis dritte Widerstand 23a bis 23c jedoch auch als tatsächliche Bauelemente ausgeführt. Die Lasteinheit 20 weist ferner einen ersten Anschluss 21a, einen zweiten Anschluss 21b und einen dritten Anschluss 21c auf. Ferner weist die Lasteinheit einen Rückführungsanschluss 24 auf. Der erste Anschluss 21a ist über eine Reihenschaltung des zweiten Widerstandes 23b, des zweiten induktiven Elementes 22b, des dritten Widerstandes 23c und des dritten induktiven Elementes 22c mit dem Rückführungsanschluss 24 verbunden. Der zweite Anschluss 21b ist über eine Reihenschaltung des ersten induktiven Elementes 22a und des ersten Widerstandes 23a mit dem Rückführungsanschluss 24 verbunden. Der dritte Anschluss 21c ist mit dem Rückführungsanschluss 24 direkt verbunden. Die Lasteinheit 20 weist somit mehrere Anschlüsse 21a bis 21c auf, wobei die Lasteinheit 20 zwischen dem ersten Anschluss 21a und dem dritten Anschluss 21c das erste induktive Element 22a aufweist und zwischen dem ersten Anschluss 21a und dem dritten Anschluss 21c das zweite induktive Element 22b sowie das dritte induktive Element 22c aufweist. Ferner weist die Lasteinheit 20 zwischen dem ersten Anschluss 21a und dem zweiten Anschluss 21b das erste bis dritte induktive Elemente 22a bis 22c auf.

Die Batterieeinheit 10 umfasst die Batterie 12, einen ersten Batterieschalter 13a, einen zweiten Batterieschalter 13b, eine Schottky-Diode 13c sowie einen Sensor 14. Der Sensor 14 ist ein Sensor, der zum Messen einer Spannung und eines Stroms geeignet ist. Zum Messen eines Stromes kann der Sensor 14 dazu einen Messwiderstand umfassen. Sowohl der erste Batterieschalter 13a als auch der zweite Batterieschalter 13b sind durch einen MOSFET ausgeführt. Die Batterieeinheit 10 weist einen ersten Pol 11a und einen zweiten Pol 11b auf. Der erste Pol 11a und der zweite Pol 11b sind dabei die Punkte der Batterieeinheit 10, an denen eine Spannung abgegriffen wird. Der erste Pol 11a ist über eine Reihenschaltung des ersten Batterieschalters 13a, des zweiten Batterieschalters 13b und des Sensors 14 mit einem positiven Pol der Batterie 12 verbunden. Der zweite Pol 11b der Batterieeinheit 10 ist mit einem negativen Pol der Batterie 12 verbunden. Ferner ist der erste Pol 11a mit einer Katode der Schottky-Diode 13c verbunden. Die Anode der Schottky-Diode 13c ist mit dem zweiten Pol 11b verbunden. Durch den ersten Batterieschalter 13a und den zweiten Batterieschalter 13b wird es ermöglicht, die Batterie 12 von dem ersten Pol 11a zu trennen. Somit kann ein Stromfluss durch die Batterie 12 unterbunden werden, falls eine Überladung oder Tiefentladung der Batterie 12 droht. Durch die Schottky-Diode 13c wird eine direkte leitende Verbindung zwischen dem ersten Pol 11a und dem zweiten Pol 11b hergestellt, falls eine Überspannung an den Polen der Batterieeinheit 10 anliegt. Der erste Batterieschalter 13a, der zweite Batterieschalter 13b und die Schottky-Diode 13c bilden somit zusammen eine Schutzschaltung gegen Überladung der Batterie 12 und somit der Batterieeinheit 10.

Der Wechselrichter 30 umfasst einen Kondensator 38, ein erstes Schaltelement 31, ein zweites Schaltelement 32, ein drittes Schaltelement 33, ein viertes Schaltelement 34, ein fünftes Schaltelement 35 und ein sechstes Schaltelement 36. Jedes des ersten bis sechsten Schaltelementes 31 bis 36 ist ein MOSFET. Ein erster Eingang 37a des Wechselrichters 30 ist mit jeweils einer ersten Seite des ersten bis dritten Schaltelementes 31 bis 33 verbunden. Eine zweite Seite des zweiten Schaltelementes 32 ist mit dem ersten Anschluss 21a der Lasteinheit 20 verbunden. Eine zweite Seite des ersten Schaltelementes 31 ist mit dem zweiten Anschluss 21b der Lasteinheit 20 verbunden. Eine zweite Seite des dritten Schaltelementes 33 ist mit dem dritten Anschluss 21c der Lasteinheit 20 verbunden. Ferner ist die zweite Seite des zweiten Schaltelementes 32 mit einer ersten Seite des vierten Schaltelementes 34 verbunden. Die zweite Seite des ersten Schaltelementes 31 ist ferner mit einer ersten Seite des fünften Schaltelementes 35 verbunden. Die zweite Seite des dritten Schaltelementes 33 ist ferner mit einer ersten Seite des sechsten Schaltelementes 36 verbunden. Eine jeweils zweite Seite des vierten bis sechsten Schaltelementes 34 bis 36 ist jeweils mit dem zweiten Eingang 37b des Wechselrichters 30 verbunden. Der erste Eingang 37a des Wechselrichters 30 ist zudem über den Kondensator 38 mit dem zweiten Eingang 37b des Wechselrichters verbunden.

Die Auswahleinheit 40 umfasst einen ersten Auswahlschalter 41 und einen zweiten Auswahlschalter 42. Der erste Auswahlschalter ist ein dreipoliger Schalter. Der erste Auswahlschalter 41 ist mit jeweils einem seiner Pole mit dem ersten Pol der Batterieeinheit 10, dem Rückführungsanschluss 24 der Lasteinheit 20 und dem ersten Eingang des Wechselrichters 30 verbunden. Der erste Auswahlschalter 41 kann derart geschaltet werden, dass entweder der erste Pol 11a der Batterieeinheit 10 mit dem ersten Eingang 37a des Wechselrichters 30 verbunden ist oder der erste Pol 11a der Batterieeinheit 10 mit dem Rückführungsanschluss 24 der Lasteinheit 10 verbunden ist. Der zweite Auswahlschalter 42 ist auf einer ersten Seite trennbar mit einem Spannungsabgriff 51 der externen Versorgungseinheit 50 verbunden und mit einer zweiten Seite mit dem ersten Eingang 37a des Wechselrichters 30 verbunden. Der zweite Auswahlschalter 42 ermöglicht somit eine schaltbare Verbindung zwischen dem Spannungsabgriff 51 und dem ersten Eingang 37a. Die Verbindung zwischen dem zweiten Auswahlschalter 42 und dem Spannungsabgriff 51 der externen Versorgungseinheit 50 kann über ein Ladekabel hergestellt werden, falls ein Benutzer des Fahrrades beabsichtigt, die Batterie 12 mittels der externen Versorgungseinheit 50 zu laden. Der zweite Auswahlschalter gewährleistet dabei unter anderem eine Spannungsfreiheit des Ladekabels während der Betriebsphase.

Der erste und der zweite Auswahlschalter 41, 42 sind in dieser Ausführungsform als Relais ausgeführt. In weiteren Ausführungsformen können diese aber auch als eine Schaltungsanordnung von Transistoren, insbesondere MOSFETs oder anderer Leistungshalbleiter, ausgeführt werden.

Der zweite Pol 11b der Batterieeinheit 10 ist mit dem zweiten Eingang 37b des Wechselrichters 30 verbunden.

Die externe Versorgungseinheit 50 weist eine Gleichspannungsquelle 52 auf, die eine Gleichspannung von 60 Volt abgibt. Die Gleichspannung ist dabei höher als eine Nennspannung der Batterie 12, welche in dieser Ausführungsform zu 36 Volt gewählt ist. Ein negativer Pol der Spannungsquelle 52 ist mit einer Schaltungsmasse 53 der externe Versorgungseinheit 50 verbunden und ein positiver Pol der Spannungsquelle 52 ist mit dem externen Spannungsabgriff 51 der externen Versorgungseinheit 50 verbunden. Anstelle der externe Versorgungseinheit 50 kann ebenso eine alternative externe Versorgungseinheit, die eine Gleichstromquelle aufweist, an die erfindungsgemäße Vorrichtung angeschlossen werden.

Der negative Pol der Batterie 12 bildet ebenfalls eine Schaltungsmasse. Bei einem Verbinden der externen Versorgungseinheit mit der erfindungsgemäßen Schaltung ist es daher vorteilhaft, wenn ein Kontakt zwischen der Schaltungsmasse der externen Versorgungseinheit 50 und der Schaltungsmasse der Batterieeinheit 10 hergestellt wird.

Die Steuereinheit 60 ist sowohl mit dem Wechselrichter 30 als auch mit der Auswahleinheit 40 verbunden. Diese Verbindung ist derart ausgelegt, dass durch die Steuereinheit 60 sowohl der erste Auswahlschalter, der zweite Auswahlschalter und auch das erste bis sechste Schaltelement geschaltet werden können. Ferner ist die Steuereinheit 60 mit der Batterieeinheit 10 verbunden, sodass eine von dem Sensor 14 gemessene Spannung oder ein von dem Sensor 14 gemessener Strom an die Steuereinheit 60 übermittelt werden kann. Zum Schalten des ersten bis sechsten Schaltelementes 31 bis 36 wird jeweils ein pulsweitenmoduliertes Signal von der Steuereinheit 60 an das entsprechende Schaltelement 31 bis 36 übertragen.

Ist die erfindungsgemäße Vorrichtung mit der externen Versorgungseinheit 50 verbunden, so befindet sich diese in einer Ladephase. In dieser Ladephase wird die Batterie 12 der Batterieeinheit 10 mittels der externen Versorgungseinheit 50 aufgeladen. Ist die erfindungsgemäße Vorrichtung von der externen Versorgungseinheit 50 getrennt, so befindet sich diese in einer Betriebsphase. In der Betriebsphase ist es der Steuereinheit 60 ermöglicht, den Wechselrichter 30 in der Art ansteuern, dass der Motor der Lasteinheit 20, versorgt durch die Batterieeinheit 10, einen Vortrieb des Fahrrades verursacht. In der Betriebsphase ist der zweite Auswahlschalter 42 geöffnet und der erste Auswahlschalter 41 stellt eine leitende Verbindung zwischen dem ersten Pol 11a der Batterieeinheit 10 und dem ersten Eingang 37a des Wechselrichters 30 her.

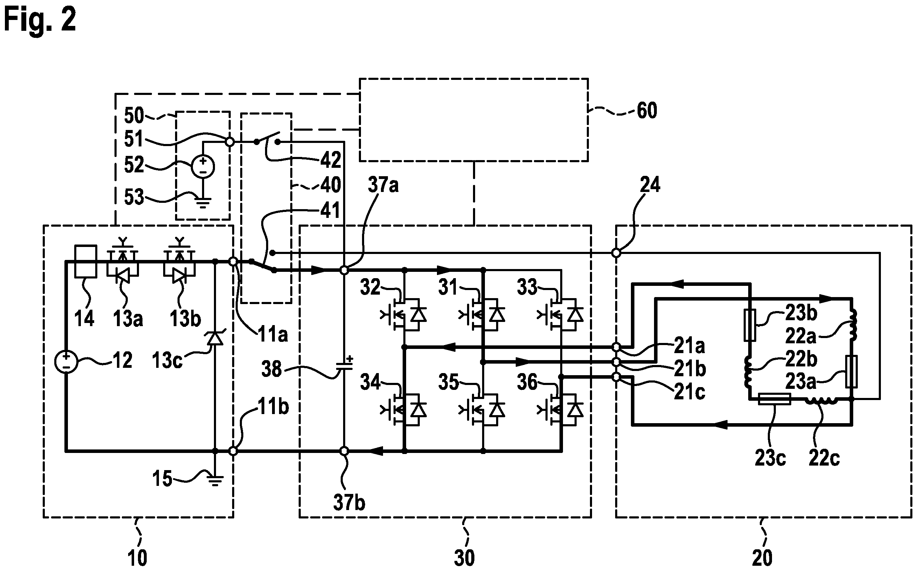

Es wird auf Figur 2 verwiesen, die einen beispielhaften Stromfluss in der Betriebsphase zeigt. Die Schaltelemente 31 bis 36 des Wechselrichters 30 werden durch die Steuereinheit 60 derart geschaltet, dass jeweils einer der Anschlüsse 21a bis 21c der Lasteinheit 20 auf ein positives Spannungspotenzial der Batterie 12 angehoben wird und zugleich die beiden anderen Anschlüsse auf ein Spannungspotenzial der Schaltungsmasse 15 gezogen werden. Figur 2 zeigt dabei den Zustand, in dem der zweite Anschluss 21b der Lasteinheit 20 auf das positive Potenzial der Batterie 12 angehoben wird und der erste Anschluss 21a sowie der dritte Anschluss 21c auf das Spannungspotenzial der Schaltungsmasse 15 gezogen werden. Durch entsprechendes wechselndes Schalten der ersten bis sechsten Schaltelemente 31 bis 36 wird somit ein Drehfeld erzeugt, durch welches die induktiven Elemente 22a bis 22c des Motors wechselweise mit einer Spannung beaufschlagt werden. Dies führt zu einer Drehbewegung des Motors. Diese Drehbewegung des Motors kann basierend auf beliebigen Parametern durch die Steuereinheit 60 angesteuert werden.

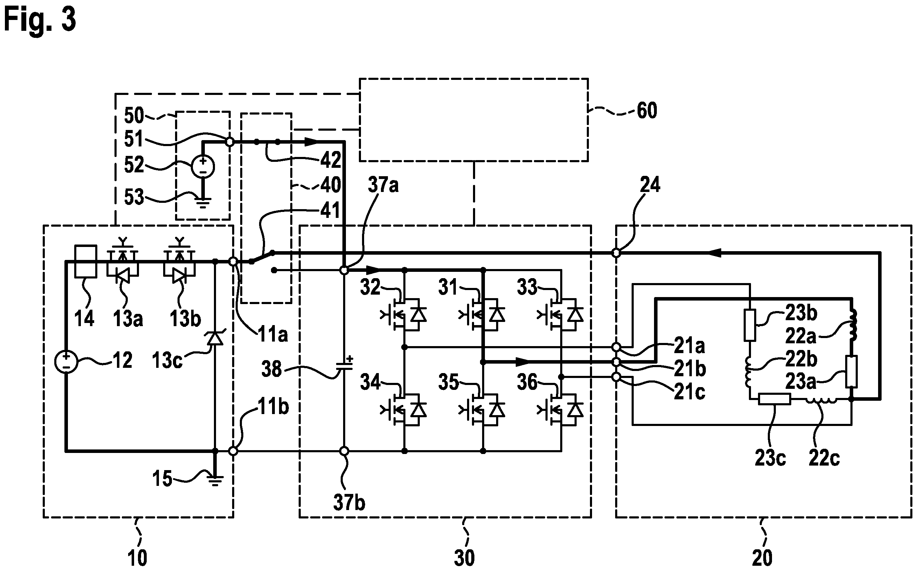

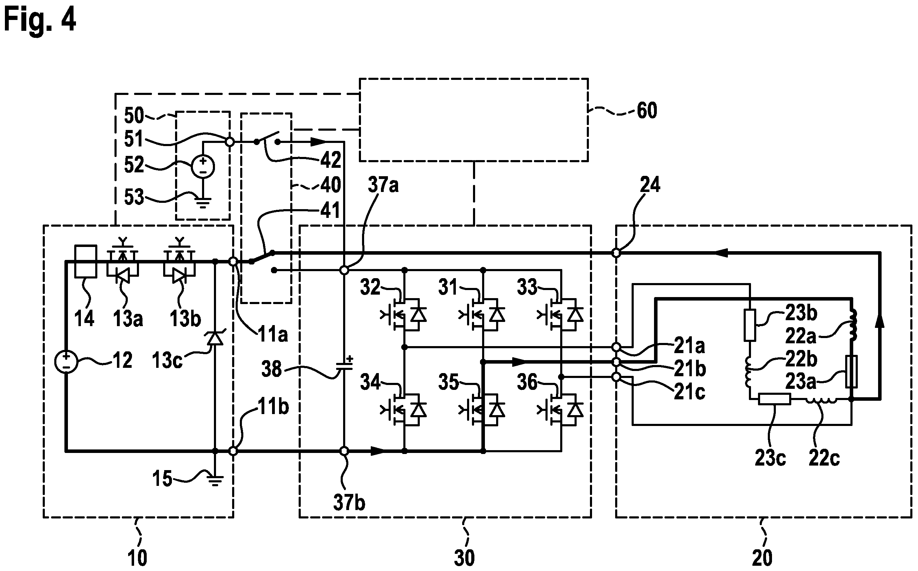

Der erste Batterieschalter 13a sowie der zweite Batterieschalter 13b sind in dieser Betriebsphase geschlossen, um einen Stromfluss von der Batterie 12 zu der Lasteinheit 20 zu ermöglichen. Die Figuren 3 und 4 zeigen einen Stromfluss in der erfindungsgemäßen Vorrichtung in einer Ladephase. Dabei zeigt Figur 3 ein erstes Zeitintervall der Ladephase und Figur 4 ein zweites Zeitintervall der Ladephase. Die Ladephase ist in dieser Ausführungsform dadurch gekennzeichnet, dass in dieser Wechselweise das erste Zeitintervall und das zweite Zeitintervall durchlaufen werden.

In der Ladephase ist der zweite Auswahlschalter 42 der Auswahleinheit 40 geschlossen, was bevorzugt dann passiert, wenn die erfindungsgemäße Vorrichtung an die externe Versorgungseinheit 50 angeschlossen wird. Zudem ist der erste Auswahlschalter 41 der Auswahleinheit 40 derart geschaltet, dass der erste Pol 11a der Batterieeinheit 10 mit dem Rückführungsanschluss 24 der Lasteinheit 20 verbunden ist.

In der Ladephase kann durch ein entsprechendes Schalten der Schaltelemente 31 bis 36 des Wechselrichters 30 entweder eine Ladespannung oder ein Ladestrom geregelt werden, mit dem die Batterie 12 der Batterieeinheit 10 geladen wird. In dieser ersten Ausführungsform wird die Batterie 12 zunächst mit einem konstanten Ladestrom geladen und, sobald ein vorgegebener Ladezustand erreicht ist, mit einer konstanten Ladespannung geladen.

Unabhängig davon, ob ein Ladestrom oder eine Ladespannung geregelt wird, besteht die Ladephase aus einem ersten Zeitintervall und einem zweiten Zeitintervall, welche im Verlauf der Ladephase wechselweise auftreten.

Ein Stromfluss in dem ersten Zeitintervall ist in Figur 3 gezeigt. In dem ersten Zeitintervall ist das erste Schaltelement 31 durchgeschaltet, also leitend. Die übrigen Schaltelemente 32 bis 36 sind nicht durchgeschaltet, also nicht leitend. Es fließt somit ein Strom von der externen Versorgungseinheit 50 durch das erste Schaltelement 31, das erste induktive Element 22a, den ersten Widerstand 23a, den zweiten Batterieschalter 13b, den ersten Batterieschalter 13a und den Sensor 14 zu der Batterie 12. Der Stromkreis schließt sich über die Schaltungsmasse 53 der externen Versorgungseinheit und die Schaltungsmasse der Batterieeinheit 10. Da sich in diesem Strompfad das erste induktive Element 22a befindet, steigt der Strom nach dem Durchschalten des ersten Schaltelementes 31 langsam an. Wird das Schaltelement 31 geöffnet, so wird dieser Anstieg unterbrochen.

In dem zweiten Zeitintervall ist das erste Schaltelement 31 nicht leitend und das fünfte Schaltelement 35 ist leitend. Die übrigen Schaltelemente 32, 33, 34, 36 sind nicht durchgeschaltet, also nicht leitend. Dieser Zustand ist in Figur 4 gezeigt. Ein Strom fließt nun von dem negativen Pol der Batterie 12 über das fünfte Schaltelement 35, das erste induktive Element 22a, den ersten Widerstand 23a, den zweiten Batterieschalter 13b, den ersten Batterieschalter 13a und den Sensor 14 zu dem positiven Pol der Batterie 12. Der Strom befindet sich nun in einem Freilauf und sinkt gegenüber dem Wert, den der Ladestrom in dem ersten Zeitintervall angenommen hat.

Im Folgenden wird das erste Schaltelement 31 durchgeschaltet und das fünfte Schaltelement 35 geöffnet. Es tritt erneut der Zustand des ersten Zeitintervalls ein. Durch ein wechselweises Schalten zwischen den Zuständen des ersten Zeitintervalls und des zweiten Zeitintervalls, also in diesem Fall durch ein wechselweises Schalten des ersten Schaltelementes 31 und des fünften Schaltelementes 35, kann, abhängig von der Länge des ersten beziehungsweise des zweiten Zeitintervalls, der Ladestrom geregelt werden.

Ebenso wie der Ladestrom kann auch die Ladespannung durch ein entsprechendes Schalten der Schaltelemente 31 bis 36 geregelt werden. Die Spannungsregelung erfolgt entsprechend der Stromregelung. Bei einem Durchschalten des ersten Schaltelementes 31 in dem ersten Zeitintervall tritt ein hoher Spannungsabfall an dem ersten induktiven Element 22a unmittelbar nach dem Schalten des ersten Schaltelementes 31 auf. Dieser Spannungsabfall über das erste induktive Element 22a wird in einem Verlauf des ersten Zeitintervalls geringer, wodurch eine Spannung über die Batterie 12 ansteigt. In dem zweiten Intervall kann die Ladespannung bei nicht leitendem ersten Schaltelement 31 und leitendem fünften Schaltelement 35 wieder abfallen. Entsprechend der zuvor beschriebenen Stromregelung kann somit ebenso eine Spannungsregelung erfolgen.

Die Regelung des Stroms oder der Spannung erfolgt bevorzugt über einen 2 Punkt Regler (mit Hysterese) oder, wie in dieser ersten Ausführungsform, durch eine Pulsweitenmodulation.

In weiteren Ausführungsformen der Erfindung wird nicht nur das erste Schaltelement 31 in dem ersten Zeitintervall geschaltet, sondern eine beliebige Anzahl der Schaltelemente 31 bis 36, die mit dem ersten Eingang 37a des Wechselrichters 30 verbunden sind, werden durchgeschaltet. Auch wird nicht nur das fünfte Schaltelement 31 in dem zweiten Zeitintervall geschaltet, sondern eine beliebige Anzahl der Schaltelemente 31 bis 36, die mit dem zweiten Eingang 37b des Wechselrichters 30 verbunden sind, werden durchgeschaltet. In dem zweiten Zeitintervall werden bevorzugt jeweils die Schaltelemente des Wechselrichters 30 durchgeschaltet, deren erste Seite mit der zweiten Seite eines in dem ersten Zeitintervall durchgeschalteten Schaltelementes verbunden ist.

In weiteren Ausführungsformen der Erfindung umfasst die Lasteinheit 20 eine Sternschaltung, wobei zwischen dem Rückführungsanschluss 24 und jedem der Anschlüsse der Lasteinheit 20 jeweils ein induktives Element liegt.

In einer alternativen Ausführungsform der Erfindung wird in dem zweiten Zeitintervall der Ladephase keines der Schaltelemente 31 bis 36 in einen leitenden Zustand geschaltet. Dabei sind die Schaltelemente 31 bis 36 als MOSFETs ausgeführt und der Strom fließt in dem zweiten Zeitintervall über eine Inversdiode 35a von zumindest einem der Schaltelemente 31 bis 36, die in dem Wechselrichter 30 auf Seiten des zweiten Pols angeordnet sind (low-side). Anstelle der Inversdiode 35a kann dabei ebenso eine Diode als zusätzliches Bauelement angeordnet sein, was selbiges Prinzip auch im Verbund mit einem Schaltelement ohne Inversdiode (z.B. als IGBT) ermöglicht.

Erfindungsgemäß wird somit durch die Komponenten eines Wechselrichters in Kombination mit dem Komponenten einer Lasteinheit ein Abwärtswandler geschaffen, der das Laden einer Batterie 12 einer Batterieeinheit 10 mittels einer Gleichspannung oder eines Gleichstromes ermöglicht.

## Patentansprüche

1. Vorrichtung zum Laden einer Batterieeinheit (10) und Betreiben einer Lasteinheit (20) über einen Wechselrichter (30), umfassend:
eine Lasteinheit (20) mit mehreren Anschlüssen (21), wobei die Lasteinheit (20) zwischen zumindest zweien der Anschlüsse (21) zumindest ein induktives Element (22a, 22b, 22c) aufweist und wobei die Lasteinheit (20) eine Dreiecksschaltung oder eine Sternschaltung aufweist;
einen Wechselrichter (30), der mehrere Schaltelemente (31 - 36) umfasst und dessen Ausgang mit den Anschlüssen (21) der Lasteinheit (20) gekoppelt ist,
eine Auswahleinheit (40), und
eine Steuereinheit, wobei die Steuereinheit dazu eingerichtet ist,
- in einer Betriebsphase die Auswahleinheit (40) derart anzusteuern, dass ein erster Pol (11a) einer Batterieeinheit (10) mit einem ersten Eingang (37a) des Wechselrichters (30) gekoppelt ist, um diesen mit einer Batteriespannung zu versorgen, und die Schaltelemente (31 - 36) des Wechselrichters (30) derart zu schalten, dass die Lasteinheit (20) mit einer benötigten Wechselspannung versorgt wird,
wobei die Steuereinheit dazu eingerichtet ist:
- in einer Ladephase, in welcher ein Spannungsabgriff (51) einer externen Versorgungseinheit (50) mit dem ersten Eingang (37a) des Wechselrichters (30) gekoppelt ist, um diesen mit einer externen Gleichspannung oder einem externen Gleichstrom zu versorgen, die Auswahleinheit derart anzusteuern, das der erste Pol (11a) der Batterieeinheit (10) mit einem der induktiven Elemente (22a, 22b, 22c) der Lasteinheit (20) gekoppelt ist, und die Schaltelemente (31 - 36) des Wechselrichters (30) derart zu schalten, dass die Batterieeinheit (10) von der externen Versorgungseinheit (50) über das an die Batterieeinheit (10) gekoppelte induktive Element (22a, 22b, 22c) mit einem benötigten Ladestrom oder einer benötigten Ladespannung versorgt wird.
wobei der Wechselrichter (30) in einem ersten Zeitintervall und in einem in einem zweiten Zeitintervall, welche im Verlauf der Ladephase wechselweise auftreten:
in dem ersten Zeitintervall der Ladephase die externe Versorgungseinheit (50) über ein erstes Schaltelement (31) der Schaltelemente (31 - 36) und über ein induktives Element (22a) mit einem ersten Pol (11a) der Batterieeinheit (10) koppelt und mehrere der Schaltelemente (31 - 36), die mit dem ersten Eingang (37a) des Wechselrichters verbunden sind, in dem ersten Zeitintervall durchgeschaltet werden; und
in dem zweiten Zeitintervall der Ladephase einen zweiten Pol (11b) der Batterieeinheit (10) über ein zweites Schaltelement (35) der Schaltelemente (31 - 36) und über ein induktives Element (22a) der Lasteinheit mit dem ersten Pol der Batterieeinheit (10) koppelt, und mehrere der Schaltelemente (31 - 36), die mit dem zweiten Eingang (37b) des Wechselrichters verbunden sind, in dem zweiten Zeitintervall durchgeschaltet werden.

2. Vorrichtung nach einem der vorherigen Ansprüche, **dadurch gekennzeichnet, dass** die Lasteinheit (20) einen Motor umfasst, wobei das induktive Element (22a, 22b, 22c) insbesondere eine Spule des Motors ist.

3. Vorrichtung nach einem der vorherigen Ansprüche, **dadurch gekennzeichnet, dass** die Vorrichtung einen Sensor zum Messen der Spannung und/oder des Stroms, mit welchem eine Batterie (12) der Batterieeinheit (10) geladen wird, umfasst, und die Schaltelemente (31 - 36) in der Ladephase derart geschaltet werden, dass eine Regelung der Spannung und/oder des Stroms auf Basis der durch den Sensor gemessenen Werte erfolgt.

4. Vorrichtung nach einem der vorherigen Ansprüche, **dadurch gekennzeichnet, dass** die Batterieeinheit (10) in der Ladephase mit mehreren der induktiven Elemente gekoppelt wird und von der externen Versorgungseinheit (50) über die mehreren an die Batterieeinheit (10) gekoppelten induktiven Elemente (22a, 22b, 22c) mit dem benötigten Ladestrom versorgt wird.

5. Vorrichtung nach einem der vorherigen Ansprüche, **dadurch gekennzeichnet, dass** der Wechselrichter (30) zumindest ein kapazitives Element (38) umfasst, welches einen eingangsseitigen Puffer bildet.

6. Vorrichtung nach einem der vorherigen Ansprüche, ferner umfassend eine Batterieeinheit (10), wobei die Batterieeinheit (10) eine Schutzschaltung (13a, 13b, 13c) gegen Überladung einer Batterie (12) umfasst.

7. Vorrichtung nach Anspruch 1, **dadurch gekennzeichnet, dass** das zweite Schaltelement (35) eine Diode, insbesondere eine Inversdiode oder auch parasitäre Diode umfasst, wobei das Koppeln des zweiten Pols (11b) der Batterieeinheit (10) mit dem ersten Pol (11a) der Batterieeinheit (10) über das induktive Element (22a) der Lasteinheit in dem zweiten Zeitintervall über die Diode erfolgt.

8. Vorrichtung nach einem der vorherigen Ansprüche, **dadurch gekennzeichnet, dass** dem induktiven Element (22a, 22b, 22c) ein Widerstand (23a, 23b, 23c) vorgeschaltet ist.

9. Vorrichtung nach einem der vorherigen Ansprüche, **dadurch gekennzeichnet, dass** die Schaltelementen (31 - 36) Leistungstransistoren, insbesondere IGBTs oder MOSFETs sind.

10. Verfahren zum Laden einer Batterieeinheit (10) und Betreiben einer Lasteinheit (20) über einen Wechselrichter (30), umfassend:
- Feststellen, ob eine Betriebsphase oder eine Ladephase vorliegt,
- im Falle einer vorliegenden Betriebsphase:
o Koppeln eines ersten Pols (11a) einer Batterieeinheit mit einem ersten Eingang (37a) eines Wechselrichters (30), um diesen mit einer Batteriespannung zu versorgen,
o Schalten von Schaltelementen (31 - 36) des Wechselrichters (30) in einer Weise, dass die Lasteinheit (20) mit einer benötigten Wechselspannung versorgt wird, und
- im Falle einer vorliegenden Ladephase:
o Koppeln des ersten Pols (11a) der Batterieeinheit (10) mit einem induktiven Element (22a, 22b, 22c) der Lasteinheit (20),
o Koppeln eines Spannungsabgriffs (51) einer externen Versorgungseinheit (50) mit dem ersten Eingang (37a) des Wechselrichters (30), um diesen mit einer externen Gleichspannung oder einem externen Gleichstrom zu versorgen,
o Schalten der Schaltelemente (31 - 36) des Wechselrichters (30) in einer Weise, dass die Batterieeinheit (10) von der externen Versorgungseinheit (50) über eines der induktiven Elemente (22a, 22b, 22c) mit einem benötigten Ladestrom oder einer benötigten Ladespannung versorgt wird, und
o in einem ersten Zeitintervall und in einem in einem zweiten Zeitintervall, welche im Verlauf der Ladephase wechselweise auftreten:
o in dem ersten Zeitintervall der Ladephase, Koppeln der externe Versorgungseinheit (50) über ein erstes Schaltelement (31) der Schaltelemente (31 - 36) und über ein induktives Element (22a) mit einem ersten Pol (11a) der Batterieeinheit (10) und mehrere der Schaltelemente (31 - 36), die mit dem ersten Eingang (37a) des Wechselrichters verbunden sind, in dem ersten Zeitintervall durchgeschaltet werden; und
o in dem zweiten Zeitintervall der Ladephase, Koppeln eines zweiten Pols (11b) der Batterieeinheit (10) über ein zweites Schaltelement (35) der Schaltelemente (31 - 36) und über ein induktives Element (22a) der Lasteinheit mit dem ersten Pol der Batterieeinheit (10), und mehrere der Schaltelemente (31 - 36), die mit dem zweiten Eingang (37b) des Wechselrichters verbunden sind, in dem zweiten Zeitintervall durchgeschaltet werden.

## Claims

1. Device for charging a battery unit (10) and operating a load unit (20) via an inverter (30), comprising:
a load unit (20) having a plurality of connections (21), wherein the load unit (20) has at least one inductive element (22a, 22b, 22c) between at least two of the connections (21) and wherein the load unit (20) has a delta circuit or a star circuit;
an inverter (30), which comprises a plurality of switching elements (31-36) and the output of which is coupled to the connections (21) of the load unit (20), a selection unit (40), and
a control unit, wherein the control unit is set up
- in an operating phase to actuate the selection unit (40) in such a way that a first pole (11a) of a battery unit (10) is coupled to a first input (37a) of the inverter (30) in order to supply same with a battery voltage, and to switch the switching elements (31-36) of the inverter (30) in such a way that the load unit (20) is supplied with a required AC voltage,
wherein the control unit is set up:
- in a charging phase in which a voltage tap (51) of an external supply unit (50) is coupled to the first input (37a) of the inverter (30) in order to supply same with an external DC voltage or external direct current, to actuate the selection unit in such a way that the first pole (11a) of the battery unit (10) is coupled to one of the inductive elements (22a, 22b, 22c) of the load unit (20) and to switch the switching elements (31-36) of the inverter (30) in such a way that the battery unit (10) is supplied with a required charging current or a required charging voltage by the external supply unit (50) via the inductive element (22a, 22b, 22c) coupled to the battery unit (10),
wherein the inverter (30) in a first time interval and in a second time interval, which occur alternately over the course of the charging phase:
in the first time interval of the charging phase couples the external supply unit (50) to a first pole (11a) of the battery unit (10) via a first switching element (31) of the switching elements (31-36) and via an inductive element (22a) and a plurality of the switching elements (31-36), which are connected to the first input (37a) of the inverter, are interconnected in the first time interval;
and
in the second time interval of the charging phase couples a second pole (11b) of the battery unit (10) to the first pole of the battery unit (10) via a second switching element (35) of the switching elements (31-36) and via an inductive element (22a) of the load unit and a plurality of the switching elements (31-36), which are connected to the second input (37b) of the inverter, are interconnected in the second time interval.

2. Device according to one of the preceding claims, **characterized in that** the load unit (20) comprises a motor, wherein the inductive element (22a, 22b, 22c) is, in particular, a coil of the motor.

3. Device according to one of the preceding claims, **characterized in that** the device comprises a sensor for measuring the voltage and/or the current with which a battery (12) of the battery unit (10) is charged and the switching elements (31-36) in the charging phase are switched in such a way that the voltage and/or the current is regulated on the basis of the values measured by the sensor.

4. Device according to one of the preceding claims, **characterized in that** the battery unit (10) in the charging phase is coupled to a plurality of the inductive elements and is supplied with the required charging current by the external supply unit (50) via the plurality of inductive elements (22a, 22b, 22c) coupled to the battery unit (10).

5. Device according to one of the preceding claims, **characterized in that** the inverter (30) comprises at least one capacitive element (38), which forms an input-side buffer.

6. Device according to one of the preceding claims, further comprising a battery unit (10), wherein the battery unit (10) comprises a protective circuit (13a, 13b, 13c) protecting against overcharging a battery (12).

7. Device according to Claim 1, **characterized in that** the second switching element (35) comprises a diode, in particular an inverse diode or else a parasitic diode, wherein the second pole (11b) of the battery unit (10) is coupled to the first pole (11a) of the battery unit (10) via the inductive element (22a) of the load unit in the second time interval via the diode.

8. Device according to one of the preceding claims, **characterized in that** a resistor (23a, 23b, 23c) is connected upstream of the inductive element (22a, 22b, 22c) .

9. Device according to one of the preceding claims, **characterized in that** the switching elements (31-36) are power transistors, in particular IGBTs or MOSFETs.

10. Method for charging a battery unit (10) and operating a load unit (20) via an inverter (30), comprising:
- determining whether an operating phase or a charging phase is present,
- in the case of a present operating phase:
o coupling a first pole (11a) of a battery unit to a first input (37a) of an inverter (30) in order to supply same with a battery voltage,
o switching switching elements (31-36) of the inverter (30) in such a way that the load unit (20) is supplied with a required AC voltage, and
- in the case of a present charging phase:
o coupling the first pole (11a) of the battery unit (10) to an inductive element (22a, 22b, 22c) of the load unit (20),
o coupling a voltage tap (51) of an external supply unit (50) to the first input (37a) of the inverter (30) in order to supply same with an external DC voltage or external direct current,
o switching the switching elements (31-36) of the inverter (30) in such a way that the battery unit (10) is supplied with a required charging current or a required charging voltage by the external supply unit (50) via one of the inductive elements (22a, 22b, 22c), and
o in a first time interval and in a second time interval, which occur alternately over the course of the charging phase:
o in the first time interval of the charging phase, coupling the external supply unit (50) to a first pole (11a) of the battery unit (10) via a first switching element (31) of the switching elements (31-36) and via an inductive element (22a) and a plurality of the switching elements (31-36), which are connected to the first input (37a) of the inverter, are interconnected in the first time interval; and
o in the second time interval of the charging phase, coupling a second pole (11b) of the battery unit (10) to the first pole of the battery unit (10) via a second switching element (35) of the switching elements (31-36) and via an inductive element (22a) of the load unit, and a plurality of the switching elements (31-36), which are connected to the second input (37b) of the inverter, are interconnected in the second time interval.

## Revendications

1. Dispositif permettant de charger une unité de batterie (10) et de faire fonctionner une unité de charge (20) par l'intermédiaire d'un onduleur (30), comprenant :
une unité de charge (20) dotée de plusieurs bornes (21), l'unité de charge (20) présentant au moins un élément inductif (22a, 22b, 22c) entre au moins deux des bornes (21), et l'unité de charge (20) présentant une connexion en triangle ou une connexion en étoile ;
un onduleur (30) qui comprend plusieurs éléments de commutation (31 à 36) et dont la sortie est couplée avec les bornes (21) de l'unité de charge (20),
une unité de sélection (40), et
une unité de commande, l'unité de commande étant aménagée,
- dans une phase de fonctionnement, pour piloter l'unité de sélection (40) de telle sorte qu'un premier pôle (11a) d'une unité de batterie (10) est couplé avec une première entrée (37a) de l'onduleur (30) pour alimenter celui-ci en tension de batterie, et pour commuter les éléments de commutation (31 à 36) de l'onduleur (30) de telle sorte que l'unité de charge (20) est alimentée par une tension alternative nécessaire,
l'unité de commande étant aménagée :
- dans une phase de chargement dans laquelle une prise de tension (51) d'une unité d'alimentation externe (50) est couplée avec la première entrée (37a) de l'onduleur (30) pour alimenter celui-ci en tension continue externe ou en courant continu externe, pour piloter l'unité de sélection de telle sorte que le premier pôle (11a) de l'unité de batterie (10) est couplé avec l'un des éléments inductifs (22a, 22b, 22c) de l'unité de charge (20), et pour commuter les éléments de commutation (31 à 36) de l'onduleur (30) de telle sorte que l'unité de batterie (10) est alimentée par l'unité d'alimentation externe (50) par l'intermédiaire de l'élément inductif (22a, 22b, 22c) couplé à l'unité de batterie (10) en courant de charge nécessaire ou en tension de charge nécessaire,
dans lequel, dans un premier laps de temps et dans un deuxième laps de temps qui se présentent en alternance au cours de la phase de chargement, l'onduleur (30) :
dans le premier laps de temps de la phase de chargement, couple l'unité d'alimentation externe (50) avec un premier pôle (11a) de l'unité de batterie (10) par l'intermédiaire d'un premier élément de commutation (31) des éléments de commutation (31 à 36) et par l'intermédiaire d'un élément inductif (22a), et plusieurs des éléments de commutation (31 à 36) qui sont reliés à la première entrée (37a) de l'onduleur sont connectés dans le premier laps de temps ; et
dans le deuxième laps de temps de la phase de chargement, couple un deuxième pôle (11b) de l'unité de batterie (10) avec le premier pôle de l'unité de batterie (10) par l'intermédiaire d'un deuxième élément de commutation (35) des éléments de commutation (31 à 36) et par l'intermédiaire d'un élément inductif (22a) de l'unité de charge, et plusieurs des éléments de commutation (31 à 36) qui sont reliés à la deuxième entrée (37b) de l'onduleur sont connectés dans le deuxième laps de temps.

2. Dispositif selon l'une quelconque des revendications précédentes, **caractérisé en ce que** l'unité de charge (20) comprend un moteur, l'élément inductif (22a, 22b, 22c) étant en particulier une bobine du moteur.

3. Dispositif selon l'une quelconque des revendications précédentes, **caractérisé en ce que** le dispositif comprend un capteur pour mesurer la tension et/ou le courant par laquelle/lequel une batterie (12) de l'unité de batterie (10) est chargée, et les éléments de commutation (31 à 36) sont commutés dans la phase de chargement de telle sorte qu'une régulation de la tension et/ou du courant est effectuée sur la base des valeurs mesurées par le capteur.

4. Dispositif selon l'une quelconque des revendications précédentes, **caractérisé en ce que** l'unité de batterie (10) est couplée avec plusieurs des éléments inductifs dans la phase de chargement et est alimentée en courant de charge nécessaire par l'unité d'alimentation externe (50) par l'intermédiaire de plusieurs éléments inductifs (22a, 22b, 22c) couplés à l'unité de batterie (10).

5. Dispositif selon l'une quelconque des revendications précédentes, **caractérisé en ce que** l'onduleur (30) comprend au moins un élément capacitif (38) qui constitue un tampon côté entrée.

6. Dispositif selon l'une quelconque des revendications précédentes, comprenant en outre une unité de batterie (10), l'unité de batterie (10) comprenant un circuit de protection (13a, 13b, 13c) contre une surcharge d'une batterie (12).

7. Dispositif selon la revendication 1, **caractérisé en ce que** le deuxième élément de commutation (35) comprend une diode, en particulier une diode inverse ou bien une diode parasite, le couplage du deuxième pôle (11b) de l'unité de batterie (10) avec le premier pôle (11a) de l'unité de batterie (10) étant effectué par l'intermédiaire de l'élément inductif (22a) de l'unité de charge dans le deuxième laps de temps par l'intermédiaire de la diode.

8. Dispositif selon l'une quelconque des revendications précédentes, **caractérisé en ce qu'**une résistance (23a, 23b, 23c) est connectée en amont de l'élément inductif (22a, 22b, 22c).

9. Dispositif selon l'une quelconque des revendications précédentes, **caractérisé en ce que** les éléments de commutation (31 à 36) sont des transistors de puissance, en particulier des IGBT ou des MOSFET.

10. Procédé permettant de charger une unité de batterie (10) et de faire fonctionner une unité de charge (20) par l'intermédiaire d'un onduleur (30), comprenant les étapes consistant à :
- constater si une phase de fonctionnement ou une phase de chargement est présente,
- si une phase de fonctionnement est présente :
o coupler un premier pôle (11a) d'une unité de batterie avec une première entrée (37a) d'un onduleur (30) afin d'alimenter celui-ci en une tension de batterie,
o commuter des éléments de commutation (31 à 36) de l'onduleur (30) de telle sorte que l'unité de charge (20) est alimentée en tension alternative nécessaire, et
- si une phase de chargement est présente :
o coupler le premier pôle (11a) de l'unité de batterie (10) avec un élément inductif (22a, 22b, 22c) de l'unité de charge (20),
o coupler une prise de tension (51) d'une unité d'alimentation externe (50) avec la première entrée (37a) de l'onduleur (30) afin d'alimenter celui-ci en tension continue externe ou en courant continu externe,
o commuter les éléments de commutation (31 à 36) de l'onduleur (30) de telle sorte que l'unité de batterie (10) est alimentée par l'unité d'alimentation externe (50) par l'intermédiaire d'un des éléments inductifs (22a, 22b, 22c) en courant de charge nécessaire ou en tension de charge nécessaire, et
o dans un premier laps de temps et dans un deuxième laps de temps qui se présentent en alternance au cours de la phase de chargement :
o dans le premier laps de temps de la phase de chargement, coupler l'unité d'alimentation externe (50) avec un premier pôle (11a) de l'unité de batterie (10) par l'intermédiaire d'un premier élément de commutation (31) des éléments de commutation (31 à 36) et par l'intermédiaire d'un élément inductif (22a), et plusieurs des éléments de commutation (31 à 36) qui sont reliés à la première entrée (37a) de l'onduleur sont connectés dans le premier laps de temps ; et
o dans le deuxième laps de temps de la phase de chargement, coupler un deuxième pôle (11b) de l'unité de batterie (10) avec le premier pôle de l'unité de batterie (10) par l'intermédiaire d'un deuxième élément de commutation (35) des éléments de commutation (31 à 36) et par l'intermédiaire d'un élément inductif (22a) de l'unité de charge, et plusieurs des éléments de commutation (31 à 36) qui sont reliés à la deuxième entrée (37b) de l'onduleur sont connectés dans le deuxième laps de temps.
